# EUROPÄISCHE PATENTANMELDUNG

(11) **EP 1 484 369 A1**
(43) Veröffentlichungstag der Anmeldung: **08.12.2004**
(21) Anmeldenummer: 04013200.3
(22) Anmeldetag: 04.06.2004
(51) Int. Cl.: C09D 11/10

(54) **UV-härtende Siebdruckfarbe**

(30) Priorität: 04.06.2003 DE 10325125
(71) Anmelder: Marabuwerke GmbH & Co. KG, 71732 Tamm (DE)
(72) Erfinder: Schäfer, Wolfgang, 72160 Horb (DE); Völlm, Carolin, 71636 Ludwigsburg (DE)
(74) Vertreter: Ostertag, Reinhard

(57) **Zusammenfassung**

Die Erfindung betrifft eine UV-härtende Siebdruckfarbe oder einen UV-härtenden Siebdrucklack insbesondere für Kunststoffkörper, die bzw. der
a) einen oder mehrere Photoinitiatoren,
b) als Harz mit dem - abgesehen von Zusätzen unter 3 Gew.%, bezogen auf die Siebdruckfarbe oder den Siebdrucklack - höchsten Bereich der Molmasse in der Siebdruckfarbe oder dem Siebdrucklack, einen Polyester mit funktionellen Gruppen, die aus freien Carbonsäure-, Hydroxyl- und Acrylatgruppen und deren Kombinationen ausgewählt sind, welcher ein Gewichtsmittel der Molmasse von 800 bis 1200 g/Mol aufweist, und
c) ein UV-härtbares Monomer enthält, in dem der Polyester gelöst ist.

Bevorzugt ist der Polyester linear. Diese Siebdruckfarbe wird in einer bevorzugten Ausführungsform ohne einen Haftvermittler verdruckt.

## Beschreibung

Die Erfindung betrifft eine UV-härtende Siebdruckfarbe oder einen UV-härtenden Siebdrucklack gemäß dem Oberbegriff von Anspruch 1 sowie ein Verfahren zum Verdrucken dieser Siebdruckfarbe bzw. dieses Siebdrucklacks. Diese Siebdruckfarbe bzw. dieser Siebdrucklack wird insbesondere zum Bedrucken von Kunststoffflaschen mit diversem Füllgut, wie Shampoos, Haushaltsreinigungsmitteln oder auch Nahrungsmitteln wie Ketchup oder Senf, verwendet.

In Ländern mit hohen Temperaturen (z.B. > 30°C) und hoher Luftfeuchtigkeit (z.B.> 80%) werden an eine Druckfarbe besondere Anforderungen bezüglich Rheologie, Haftung und Wasserbeständigkeit gestellt. Insbesondere bei schwierig zu bedruckenden Substraten aus Kunststoff, z.B. Polyethylen (PE), das mit Perlglanzpigment versetzt ist, werden in diesen Ländern in den meisten Fällen UV-härtende Druckfarben verwendet, die ein oder mehrere Acrylate enthalten und in die zusätzlich Isocyanat-Haftvermittler eingemischt werden müssen. Der Nachteil derartiger zweikomponentiger Farben ist, daß bei hoher Luftfeuchtigkeit ihre Topfzeit sehr begrenzt ist und die gewünschten 8 Stunden deutlich unterschritten werden. Des weiteren muss bei Überschreiten der Topfzeit die Farbe als Sondermüll entsorgt werden. Die Verwendung zweikomponentiger Druckfarben führt zu einer Prozessunsicherheit, denn die Haftvermittlermenge muss exakt dosiert werden, da sich bei zu geringer oder zu hoher Zugabe von Isocyanat die Eigenschaften der Druckfarbe nachteilig verändern.

Es sind zwar auch einige radikalisch härtende UV-Druckfarben auf dem Markt, die einkomponentig (ohne Haftvermittler) verdruckt werden, aber diese sind empfindlich gegenüber Luftfeuchtigkeit, die sich auf der Oberfläche des zu bedruckenden Substrates befindet, und besitzen zusätzlich eine sehr schlechte Haftung nach Wasserlagerung, weshalb sich die Farbe unter Einwirkung von Wasser ablöst. Gerade bei Benutzung von z.B. Shampoos im täglichen Gebrauch ist dies ein gravierender Nachteil.

Die vorliegende Erfindung soll diese Nachteile überwinden.

Die Erfindung stellt eine UV-härtende Siebdruckfarbe oder einen UV-härtenden Siebdrucklack insbesondere für Kunststoffkörper bereit, die bzw. der
a) einen oder mehrere Photoinitiatoren,
b) als Harz mit dem - abgesehen von Zusätzen unter 3 Gew.%, bezogen auf die Siebdruckfarbe oder den Siebdrucklack - höchsten Bereich der Molmasse in der Siebdruckfarbe oder dem Siebdrucklack, einen Polyester mit funktionellen Gruppen, die aus freien Carbonsäure-, Hydroxyl- und Acrylatgruppen und deren Kombinationen ausgewählt sind, welcher ein Gewichtsmittel der Molmasse von 800 bis 1200 g/Mol aufweist, und
c) ein UV-härtbares Monomer enthält, in dem der Polyester gelöst ist.

Der für die vorteilhaften Eigenschaften der erfindungsgemäßen Siebdruckfarbe bzw. des erfindungsgemäßen Siebdrucklacks entscheidende Bestandteil (das Harz mit dem höchsten Bereich der Molmasse) ist ein oligomerer Polyester, der funktionelle Carboxy-, Hydroxyl- und/oder Acrylatgruppen enthält. Bevorzugt ist der Polyester linear. Die geforderten Eigenschaften von Siebdruckfarben, welche derartige oligomere Polyester enthalten, können in der Regel erzielt werden, ohne daß diese mit einem Isocyanat-Haftvermittler verdruckt werden müssen.

Bevorzugt ist mindestens eine der Struktureinheiten des Polyesters, entweder die oder ein Teil der von einer Polycarbonsäure abgeleitete(n) oder die oder ein Teil der von einem Polyol abgeleitete(n), aromatisch. Dies wird unter "zumindest teilweise aromatische Struktureinheiten" verstanden. Es können auch alle Struktureinheiten aromatisch sein.

In einer bevorzugten Ausführungsform weist der Polyester funktionelle Gruppen auf, die aus Carbonsäure- und Hydroxylgruppen, die bevorzugt endständig sind, ausgewählt sind.

Der Polyester kann von einem aromatischen Polyol abgeleitete Struktureinheiten aufweisen. Als solche können Dihydroxybenzole und Dihydroxynaphthaline genannt werden. Im Fall des Vorliegens von funktionellen Acrylatgruppen im Polyester können diese zusätzlich an den aromatischen Polyol-Struktureinheiten vorliegen.

Wenn der Polyester freie funktionelle Carbonsäure- und Hydroxylgruppen aufweist, kann zumindest ein Teil der Polyole bevorzugt mehr als 2 Hydroxylgruppen besitzen, um freie funktionelle Hydroxylgruppen im Polyester zu liefern. Als derartige Polyole können beispielsweise Hydroxyhydrochinon, Pyrogallol, Phloroglucin und die verschiedenen Isomeren von Trihydroxynaphthalin genannt werden.

Es kann sich bei den von einer Polyhydroxy-Verbindung abgeleiteten Struktureinheit des erfindungsgemäß verwendeten linearen Polyesters aber auch um eine aliphatische oder cycloaliphatische Polyhydroxy-Struktureinheit handeln.

Es können z.B., ohne darauf beschränkt zu sein, aliphatische Dihydroxyverbindungen, wie Ethylenglycol, Propylenglycol, Butylenglycol, Diethylenglycol, Dipropylenglycol, Polyethylenglycol, Polypropylenglycol und 1,4-Cyclohexandimethanol als Ausgangsmaterial eingesetzt werden.

Bei freie funktionelle Carbonsäure- und Hydroxylgruppen enthaltenden Polyestern können neben dem zweiwertigen aliphatischen Alkohol ein oder mehrere höherwertige Alkohole oder sogar ausschließlich ein mehr als zweiwertiger Alkohol eingesetzt werden, um freie Hydroxylgruppen bereitzustellen. Nicht beschränkende Beispiele für mehr als zweiwertige Alkohole sind dreiwertige Alkohole wie Glycerin, 1,2,4-Trihydroxybutan, 1,3,5-Trihydroxypentan und 2-Hydroxy-1,4-cyclohexandimethanol.

Alle genannten Polyole können auch in Mischung eingesetzt werden.

Die von einer Polycarbonsäure abgeleiteten Struktureinheiten des erfindungsgemäßen verwendeten Polyesters können aliphatisch sein. Beispiele dafür sind Bernsteinsäure, Glutarsäure, Adipinsäure, Cyclohexandicarbonsäure usw. Wie im Fall der Polyole können neben den Dicarbonsäuren oder auch anstelle derselben, Tricarbonsäuren, wie beispielsweise 1,2,4-Cyclohexantricarbonsäure, als Ausgangsmaterial eingesetzt werden, um freie Carbonsäuregruppe bereitzustellen, wenn der Polyester freie Carbonsäure- und Hydroxylgruppen enthält. Beim Vorliegen von freien funktionellen Acrylatgruppen können diese ebenfalls an den aliphatischen Polycarbonsäure-Struktureinheiten vorliegen.

Falls die von einer Polycarbonsäure abgeleiteten Polyester-Struktureinheiten aromatisch sind, kann es sich dabei beispielsweise und ohne Beschränkung um Phthalsäure, Terephthalsäure, 1,5-Naphthalindicarbonsäure und/oder 1,6-Naphthalindicarbonsäure handeln. Wieder können, neben oder anstelle der aromatischen Dicarbonsäuren, Tricarbonsäuren, wie Trimellithsäure, Pyromellithsäure, 1,5,6-Naphthalintricarbonsäure als Ausgangsmaterial eingesetzt werden, um freie Carbonsäuregruppen des Polyesters bereitzustellen, wenn Polyester vorliegen, die freie funktionelle Carbonsäure- und Hydroxylgruppen enthalten.

Alle von einer Polycarbonsäure abgeleiteten Struktureinheiten können auch in Mischung verwendet werden.

Es können sowohl die von einem Polyol als auch die von einer Polycarbonsäure abgeleiteten Struktureinheiten aromatisch sein.

Weiter kann der erfindungsgemäß verwendete Polyester auch Chlor-Substituenten aufweisen, insbesondere, wenn der Polyester freie funktionelle Acrylatgruppen enthält.

Bevorzugt ist der erfindungsgemäß verwendete Polyester linear.

Bei der Herstellung von linearen Polyestern aus Carbonsäure- (oder -ester- oder -anhydrid-) und Alkohol-Ausgangsmaterialien, die mehr funktionelle Gruppen als zwei Säure- bzw. Alkoholgruppen aufweisen, müssen, wenn ein linearer Polyester erhalten werden soll, die darüber hinaus vorliegenden funktionellen Gruppen geeignet geschützt werden, wie dies dem Fachmann bekannt ist, da sonst eine Verzweigung des Polyesters stattfindet. Allerdings kann der erfindungsgemäß verwendete Polyester auch Verzweigungen bis zu einem solchen Ausmaß aufweisen, daß seine Löslichkeit in dem als Lösungsmittel verwendeten UV-reaktiven Monomer nicht behindert wird.

Die erfindungsgemäß verwendeten Polyester sind im Handel erhältlich oder ihre Herstellung ist in der Literatur beschrieben. Beispiele für solche Polyester sind Ebecryl 436, Ebecryl 438, Ebecryl 439, Ebecryl 3438, Ebecryl 505, IRR 301, IRR 307, Ebecryl 524, Ebecryl 525, Ebecryl 584, Ebecryl 585, Ebecryl 586, Ebecryl 588 (alle von UCB) sowie Craynor 703, Craynor 704 und Craynor 775 (von Cray Valley).

In dieser Anmeldung sollen die Ausdrücke "Polycarbonsäure-Struktureinheit", "Polyhydroxy-Struktureinheit" usw. bedeuten, daß die betreffende Struktureinheit in dem Polyester von einer Reaktion der Polycarbonsäure mit einem Polyalkohol unter Abspaltung von einem Molekül Wasser pro Bindung ableitbar ist.

Das Gewichtsmittel der Molmasse des Polyesters beträgt 800 bis 1200 g/Mol, spezieller 800 bis 1100 g/Mol und insbesondere etwa 900 bis weniger als oder etwa gleich 1000 g/Mol.

Ein erfindungsgemäß verwendeter, freie Carbonsäure- und Hydroxylgruppen, aber keine Acrylatgruppen enthaltender Polyester weist bevorzugt eine Säurezahl von größer oder gleich 15 mg KOH/g, bevorzugter von 18 bis 32 mg KOH/g, insbesondere von 25 oder 30 mg KOH/g, auf. Die Hydroxylzahl beträgt bevorzugt 15 bis 25 mg KOH/g, bevor-zugter 19 bis 21 mg KOH.

Ein erfindungsgemäß verwendeter Polyester mit freien funktionellen Acrylatgruppen weist bevorzugt eine Säurezahl <10 mg KOH/g auf.

Der erfindungsgemäß verwendete Polyester wird in einem UV-härtbaren Monomer gelöst, welches auf Grund von zur Polymerisation geeigneten Acrylatgruppen vernetzbar ist. Bevorzugt handelt es sich bei diesem Monomer um Mono-, Dioder höhere Polyacrylate wie beispielsweise 1,6-Hexandioldiacrylat (HDDA), Dipropylenglycoldiacrylat (DPGDA), Neopentylglycoldiacrylat, Dipentaerythrithexaacrylat (DPHA), propoxyliertes Glycerintriacrylat (GPTA), Tripropylenglycoldiacrylat, (TPGDA), Dipentaerythritpentaacrylat (DiPEPA), Pentaerythrittriacrylat (PETIA), N-Vinylpyrrolidon (NVP) und ethoxyliertes Trimethylolpropantriacrylat (TMPEOTA). Ganz besonders bevorzugt ist 1,6-Hexandioldiacrylat.

Die Menge des in einem UV-härtbaren Monomer gelösten Polyesters wird bevorzugt so gewählt, daß sich eine Viskosität der Lösung von 55 000 bis 65 000 mPas, insbesondere 60 000 mPas, bei 25°C ergibt (gemessen als Höppler-Viskosität). Dies ergibt in vielen Fällen einen Gehalt an Polyester von etwa 60 bis 80 Gew.%.

Für die Zwecke der Erfindung besonders geeignete Polyester sind Ebecryl 524 der Firma UCB und Craynor 704 der Firma Cray Valley. Ebecryl 524 ist ein aromatischer Polyester mit freien funktionellen Carbonsäure- und Hydroxylgruppen, einer Säurezahl von etwa 30 mg KOH/g und einer Hydroxylzahl von etwa 20 mg KOH/g, der zu etwa 80 Gew.% in 1,6-Hexandioldiacrylat vorliegt.

Craynor 704 ist ein chlorierter aromatischer Polyester mit freien funktionellen Acrylatgruppen und einer Säurezahl < 5 mg KOH/g.

Die Menge der eingesetzten, im allgemeinen 60 bis 80 gewichtsprozentigen Lösung des Polyesters im UV-härtbaren Monomer kann je nach Anwendungsgebiet von 20 bis 60 Gew.%, bezogen auf das Gesamtgewicht der Siebdruckfarbe, variieren. Wenn beispielsweise relativ geringe Mengen der weiter unten besprochenen beschleunigenden Komponente verwendet werden, liegt die eingesetzte Menge der Polyesterlösung in einem höheren Bereich, beispielsweise von 45 bis 55 Gew.%. Wenn größere Mengen der beschleunigenden Komponente verwendet werden, liegt die Menge an eingesetzter Polyesterlösung in einem niedrigeren Bereich, beispielsweise von 35 bis 45 Gew.%.

Bei den Pigmenten, die in der Siebdruckfarbe enthalten sind, kann es sich um beliebige Pigmente handeln, z.B. um Titandioxid, Zinksulfid, Pigmentruß, Azodiarylgelb, Isoindolgelb, Diarylidorange, Chinacridonmagenta, Diketopyrrolorot, Kupferphthalocyaninblau, Kupferphthalocyaningrün, Dioxazinviolett und Diketometalloxid. Eine ziemlich umfassende Auflistung aller einsetzbaren Pigmente ist im *Colour Index International, Fourth Edition Online, 2001,* veröffentlicht von der Society of Dyers and Colourists in Verbindung mit der American Association of Textile Chemists and Colorists, zu finden. Es können auch Effektpigmente, wie Metalloxid-beschichtete Glimmer und Metallicpigmente, eingesetzt werden.

Die Menge an Buntpigment beträgt gewöhnlich 2 bis 50 Gew.%, bevorzugt 10 bis 35 Gew.%, bezogen auf das Gewicht der Siebdruckfarbe, abhängig von der Art des Pigments und der gewünschten Deckkraft. Weißpigment wird gewöhnlich in einer Menge von 20 bis 50 Gew.%, bevorzugt 30 bis 40 Gew.%, eingesetzt.

Der Siebdrucklack enthält in der Regel keine Pigmente.

Die Siebdruckfarbe oder der Siebdrucklack enthält mindestens einen Photoinitiator, gewöhnlich zwei und bevorzugt drei oder mehr Photoinitiatoren, um die Oberflächen- und Tiefenhärtung (Vernetzung) der Siebdruckfarbe oder des Siebdrucklacks im UV-Licht einzuleiten. Sie können aus den üblichen in Siebdruckfarben, Lacken etc. verwendeten Photoinitiatoren ausgewählt werden, beispielsweise, ohne darauf beschränkt zu sein, 1-Hydroxycyclohexylacetophenon (Irgacure® 184 von Ciba), 2-Methyl-1-[4-(methylthiophenyl)-2-morpholinopropan]-1-on (Irgacure® 907 von Ciba), 2-Benzyl-2-dimethylamino-1-(4-morpholinophenyl)butan-1-on (Irgacure® 369 von Ciba), Bis(2,4,6-trimethylbenzoyl)phenylphosphinoxid (Irgacure® 819 von Ciba), 2-Hydroxy-2-methyl-1-phenyl-1-propanon (Darocur® 1173 von Ciba), Isopropylthioxanthon (ITX von Lambson), 2-Chlorthioxanthon (CTX von Lambson), Benzophenon, 2,4,6-Trimethylbenzoldiphenylphosphinoxid (TPO von BASF), Ethyl-2,4,6-trimethylbenzoylphenylphosphinat (TPO-L von BASF) und Methylbenzoylformiat (MBF von Lambson). Die Gesamtmenge an Photoinitiatoren beträgt im allgemeinen 1 bis 12 Gew.%, bevorzugt 3 bis 7 Gew.%, bezogen auf das Gewicht der Siebdruckfarbe.

Weiter kann die Siebdruckfarbe oder der Siebdrucklack als Zusatz einen oder mehrere Füllstoffe umfassen. Die Beschaffenheit der Füllstoffe ist nicht besonders kritisch, sie können aus üblichen in Siebdruckfarben verwendeten Füllstoffen ausgewählt sein, wie beispielsweise, ohne darauf beschränkt zu sein, Kaolin, Bariumsulfat (in gefällter Form als Blanc Fixe), Calciumcarbonat, Zinksulfid, Kieselerde, Talkum, Aluminiumsilicat, Aluminiumhydrat und/oder Kieselsäure. Die Menge an eingesetztem Füllstoff liegt im allgemeinen im Bereich von 0 bis 50 Gew.%, bevorzugt 10 bis 30 Gew.%, z.B. 20 Gew.%, bezogen auf das Gewicht der Siebdruckfarbe oder des Siebdrucklacks.

Ein Verdicker, der in der Siebdruckfarbe oder in dem Siebdrucklack als Zusatz enthalten sein kann, kann ebenfalls aus üblichen für diesen Zweck in Siebdruckfarben/Lacken verwendeten Materialien ausgewählt sein. Dazu zählen ohne Beschränkung darauf z.B. pyrogene Kieselsäure, Schichtsilicate und Rizinusölderivate. Die eingesetzte Menge an Verdicker liegt gewöhnlich im Bereich von 0 bis 10 Gew.%, bevorzugt 1 bis 5 Gew.% und insbesondere 1,5 bis 3 Gew.%, bezogen auf das Gewicht der Siebdruckfarbe, in Abhängigkeit von der Art des Pigments oder des Siebdrucklacks.

Im allgemeinen enthält die erfindungsgemäße Siebdruckfarbe oder der Siebdrucklack als weiteren Zusatz auch einen Entschäumer und/oder ein Verlaufmittel, im allgemeinen in einer Menge von 0,5 bis 2,5 Gew.%, bevorzugt 0,5 bis 1,5 und insbesondere 1 Gew.%, bezogen auf das Gewicht der Siebdruckfarbe. Entschäumer können z.B. aus modifizierten Acrylaten oder modifizierten Acrylatcopolymeren, aber auch, und das bevorzugt, aus silikonhaltigen Verbindungen ausgewählt sein. Verlaufmittel umfassen beispielsweise modifizierte Polyacrylate und Polysiloxane.

Die erfindungsgemäße Siebdruckfarbe oder der Siebdrucklack enthält im allgemeinen zusätzlich eine die Härtung beschleunigende Komponente. Bei dieser kann es sich um ein relativ niedermolekulares Harz mit mehreren funktionellen Acrylat- oder Vinylgruppen handeln. Bevorzugt wird ein hexafunktionelles aliphatisches Urethanacrylat (z.B. als Ebecryl 5129 von UCB erhältlich) mit einem Gewichtsmittel der Molmasse von etwa 700 bis 900, insbesondere 800 g/Mol, und einer Viskosität von 600 bis 800 mPas, insbesondere 700 mPas, bei 60°C, das in unverdünnter Form eingesetzt wird. Die verwendeten Mengen der beschleunigenden Komponente liegen bei 0 bis 30 Gew.%, bevorzugt 1 bis 15 Gew.%, z.B. 1 bis 10 Gew.%, bezogen auf das Gesamtgewicht der Siebdruckfarbe oder des Siebdrucklacks. Weitere Beispiele hierfür sind Ebecryl 220, Ebecryl 1292 und Ebecryl 2220 (alle von UCB) sowie Craynor 975 (von Cray Valley).

Je höher der Gewichtsanteil an beschleunigender Komponente ist, desto höher ist die Kratzfestigkeit der Siebdruckfarbe bzw. des Siebdrucklacks. Allerdings kann bei sehr hohen Anteilen an beschleunigender Komponente die Wasserfestigkeit abnehmen. Gegebenenfalls kann, falls in einem speziellen Fall relativ hohe Anteile an beschleunigender Komponente (z.B. 20 Gew.%, bezogen auf das Gewicht der Siebdruckfarbe oder des Siebdrucklacks) gewünscht werden, der Siebdruckfarbe bzw. dem Siebdrucklack vor dem Verdrucken ein Isocyanat-Haftvermittler in einer Menge von 1 bis 10 Gew.%, bezogen auf das Gewicht der Siebdruckfarbe bzw. des Siebdrucklacks, zugesetzt werden. Derartige Isocyanat-Haftvermittler sind aliphatische Polyisocyanate wie Hexamethylendiisocyanat (HDI), Trimethylhexandiisocyanat (TMHDI), cycloaliphatische Polyisocyanate wie Isophorondiisocyanat (IPDI), hydriertes Xylylendiisocyanat (HXDI) oder Diisocyanatodicyclohexylmethan (HMDI) sowie aromatische Polyiisocyanate wie Toluylendiisocyanat (TDI), Xylylendiisocyanat (XDI), Tetramethylxylylendiisocyanat (TMXDI) oder Diisocyanatodiphenylmethan (MDI). Kommerziell erhältliche Produkte sind z.B. Desmodur E41 oder Desmodur N 75 (Bayer). Der Einsatz eines Haftvermittler ist aber im allgemeinen nicht bevorzugt.

Im allgemeinen wird der Siebdruckfarbe oder dem Siebdrucklack zusätzlich zu dem UV-härtbaren Monomer, in dem das Harz zu im allgemeinen 60 bis 80 Gew.% gelöst ist, weiteres UV-härtbares Verdünnungsmittel zugesetzt. Bei diesem UV-härtbaren Verdünnungsmittel kann es sich um die oben im Zusammenhang mit der Polyesterlösung erörterten UV-härtbaren Monomere handeln. Weiter können auch noch andere Verbindungen mit einer einzigen ethylenisch ungesättigten Bindung verwendet werden, wie beispielsweise Isobornylacrylat, 2-Phenylethylacrylat, Vinylcaprolactam und 2-(2-Ethoxyethoxy)ethylacrylat (EOEOEA). Die eingesetzten Mengen an zusätzlichem UV-härtbarem Verdünnungsmittel betragen im allgemeinen 0 bis 60 Gew.%, bevorzugt 5 bis 20 Gew.%, insbesondere 8 bis 12 Gew.%, z.B. 10 Gew.%, bezogen auf das Gewicht der Siebdruckfarbe.

Eine typische erfindungsgemäße Siebdruckfarbe enthält z.B., bezogen auf das Gesamtgewicht der Siebdruckfarbenzusammensetzung:
- 45-55 Gew.% 60-80gew.%ige Polyesterlösung in 1,6-Hexandioldiacrylat
- 3-6 Gew.% hexafunktionelles Urethanacrylat;
- 8-12 Gew.% 1,6-Hexandioldiacrylat
- 0,5-1,5 Gew.% Silikonentschäumer;
- 1,5-2,5 Gew.% 1-Hydroxycyclohexylacetophenon;
- 1,5-2,5 Gew.% 2-Methyl-1-[4-(methylthiophenyl)-2-morpholinopropan]-1-on;
- 0,5-1,5 Gew.% Isopropylthioxanthon;
- 15-25 Gew.% Füllstoffe;
- 3 bis 8 Gew.% Pigment
- 1,5-2,5 Gew.% pyrogene Kieselsäure.

Überraschend weisen die Siebdruckfarben gemäß der vorliegenden Erfindung auch ohne Isocyanat-Haftvermittler eine sehr gute Haftung auf Polyethylen (PE) (selbst wenn das Substrat mit Perlglanzpigment versetzt ist) und eine gute Haftung auf Polypropylen (PP), Polyethylenterephthalat-G (PET-G) und Polycarbonat (PC) auf. Auch nach 20 minütiger Lagerung in Wasser ist die Haftung auf PE sehr gut. Bei Lagerung der bedruckten Substrate unter hoher Luftfeuchtigkeit nimmt die Haftung der Farbe nicht ab. Weiter ist die Farbe sehr gut überdruckbar mit einer sehr guten Zwischenschichthaftung. Trotz strukturviskoser Einstellung zeigt die Farbe einen sehr hohen Glanz. Sie ist auch bei hohen Temperaturen und hoher Luftfeuchtigkeit sehr gut verdruckbar und zeigt auch nach längerer Scherbelastung und bei hohen Temperaturen eine stabile Rheologie. Weiter ist der gedruckte Film flexibel und weist eine gute Beständigkeit gegen Füllgüter der bedruckten Körper auf.

Das folgende Beispiel soll die Erfindung erläutern. Die angegebenen Gew.% sind auf das Gesamtgewicht der Siebdruckfarbenzusammensetzung bezogen.

### BEISPIEL

Es wurde eine Siebdruckfarbe der folgenden Zusammensetzung durch Mischen und Dispergieren der Bestandteile (z.B. Vordispergieren mit einem Hochgeschwindigkeitsrührer ("Dissolver"), Dispergieren mit Dreiwalzen- oder Perlmühle) auf im Stand der Technik bekannte Weise hergestellt (die Gewichtsprozentsätze sind auf das Gewicht der gesamten Siebdruckfarbe bezogen):

| | |
|---|---|
| Ebecryl 524 | 52 Gew.% |
| Hexafunktionelles Urethanacrylat (Ebecryl 5129) | 5 Gew.% |
| 1,6-Hexandioldiacrylat | 10 Gew.% |
| Polysiloxanentschäumer | 1 Gew.% |
| Irgacure® 184 | 2 Gew.% |
| Irgacure® 907 | 2 Gew.% |
| Quantacure® ITX | 1 Gew.% |
| Gefälltes Bariumsulfat (Blanc Fixe) | 20 Gew.% |
| Pigment Red 170 | 5 Gew.% |
| Pyrogene Kieselsäure | 2 Gew.% |

Die Siebdruckfarbe wurde im Siebdruckverfahren auf eine Platte aus HDPE (Polyethylen hoher Dichte) aufgebracht. Dann wurde sie mit einer fokussierten Quecksilber-Mitteldrucklampe bei 1 x 120 W/cm und 10 m/min gehärtet. Die Siebdruckfarbe wies eine mittlere Reaktivität auf.

Die Haftung auf dem HDPE wurde gemäß EN ISO 2409 getestet und betrug GT 0.

Der EN ISO 2409-Wert für die Überdruckbarkeit mit Farbe desselben Systems betrug GT 0.

Die Wasserfestigkeit wurde nach 20minütigem Eintauchen in Wasser (20°C) sofort nach dem Druck und einminütigem Abtrocknenlassen gemäß EN ISO 2409 durch Anbringen eines Gitterschnitts und Aufbringen eines Klebebands, das dann ruckartig abgezogen wurde, gemessen. Das Ergebnis entsprach dem Wert GT 0.

Die im Handandruck erzielten Ergebnisse wurden im Maschinendruck (Körperdruckmaschine der Firma Kammann) auf HDPE-Flaschen bei 50 Takten/min bestätigt.

## Patentansprüche

1. UV-härtende Siebdruckfarbe oder UV-härtender
Siebdrucklack, insbesondere für Kunststoffkörper, enthaltend
a) einen oder mehrere Photoinitiatoren,
b) als Harz mit dem - abgesehen von Zusätzen unter 3 Gew.%, bezogen auf die Siebdruckfarbe oder den Siebdrucklack - höchsten Bereich der Molmasse in der Siebdruckfarbe oder dem Siebdrucklack, einen Polyester mit funktionellen Gruppen, die aus freien Carbonsäure-, Hydroxyl- und Acrylatgruppen und deren Kombinationen ausgewählt sind, welcher ein Gewichtsmittel der Molmasse von 800 bis 1200 g/Mol aufweist, und
c) ein UV-härtbares Monomer, in dem der Polyester gelöst ist.

2. Siebdruckfarbe oder Siebdrucklack nach Anspruch 1,
**dadurch gekennzeichnet, daß** Struktureinheiten des Polyesters zumindest teilweise aromatisch sind.

3. Siebdruckfarbe oder Siebdrucklack nach Anspruch 1 oder
2, **dadurch gekennzeichnet, daß** funktionellen Gruppen des Polyesters aus bevorzugt endständigen Carbonsäure- und Hydroxylgruppen ausgewählt sind.

4. Siebdruckfarbe oder Siebdrucklack nach einem der
Ansprüche 1 bis 3, **dadurch gekennzeichnet, daß** das Gewichtsmittel des Polyesters 800 bis 1100 g/Mol beträgt.

5. Siebdruckfarbe oder Siebdrucklack nach einem der
Ansprüche 1 bis 4, **dadurch gekennzeichnet, daß** die Polyol-Struktureinheiten des Polyesters von aromatischen Polyolen abgeleitet sind.

6. Siebdruckfarbe oder Siebdrucklack nach einem der
Ansprüche 1 bis 5, **dadurch gekennzeichnet, daß** die Polycarbonsäure-Struktureinheiten des Polyesters von aromatischen Polycarbonsäuren abgeleitet sind.

7. Siebdruckfarbe oder Siebdrucklack nach einem der
Ansprüche 3 bis 6, **dadurch gekennzeichnet, daß** die Säurezahl des Polyesters 18 bis 32 mg KOH/g beträgt.

8. Siebdruckfarbe oder Siebdrucklack nach Anspruch 7,
**dadurch gekennzeichnet, daß** die Säurezahl des Polyesters etwa gleich 25 mg KOH/g ist.

9. Siebdruckfarbe oder Siebdrucklack nach einem der
Ansprüche 3 bis 8, **dadurch gekennzeichnet, daß** die Hydroxylzahl des Polyesters 15 bis 25 mg KOH/g beträgt.

10. Siebdruckfarbe oder Siebdrucklack nach einem der
Ansprüche 1 bis 9, **dadurch gekennzeichnet, daß** der Polyester linear ist.

11. Siebdruckfarbe oder Siebdrucklack nach einem der
Ansprüche 1 bis 10, **dadurch gekennzeichnet, daß** der Polyester Chloratome enthält.

12. Siebdruckfarbe nach einem der Ansprüche 1 bis 11,
**dadurch gekennzeichnet, daß** sie ein oder mehrere Pigmente enthält.

13. Siebdruckfarbe oder Siebdrucklack nach einem der
Ansprüche 1 bis 12, **dadurch gekennzeichnet, daß** sie bzw. er einen oder mehrere Füllstoffe enthält.

14. Siebdruckfarbe oder Siebdrucklack nach einem der
Ansprüche 1 bis 13, **dadurch gekennzeichnet, daß** das UV-härtbare Monomer 1,6-Hexandioldiacrylat (HDDA) ist.

15. Siebdruckfarbe oder Siebdrucklack nach einem der
Ansprüche 1 bis 14, **dadurch gekennzeichnet, daß** die Lösung des Polyesters in dem UV-härtbaren Monomer eine Viskosität von 55 000 bis 65 000 mPas bei 25°C aufweist.

16. Siebdruckfarbe oder Siebdrucklack nach einem der
Ansprüche 1 bis 15, **dadurch gekennzeichnet, daß** sie bzw. er weiter ein Verlaufmittel und/oder einen Entschäumer enthält.

17. Siebdruckfarbe oder Siebdrucklack nach einem der
Ansprüche 1 bis 16, **dadurch gekennzeichnet, daß** sie bzw. er weiter einen Verdicker enthält.

18. Siebdruckfarbe oder Siebdrucklack nach einem der
Ansprüche 1 bis 17, **dadurch gekennzeichnet, daß** sie bzw. er weiter eine die Härtung beschleunigende Komponente enthält.

19. Siebdruckfarbe oder Siebdrucklack nach Anspruch 18, **dadurch gekennzeichnet, daß** die die Härtung beschleunigende Komponente ein multifunktionelles Acrylat und/oder eine multifunktionelle Vinylverbindung ist.

20. Siebdruckfarbe oder Siebdrucklack nach Anspruch 19,
**dadurch gekennzeichnet, daß** es sich bei der beschleunigenden Komponente um ein hexafunktionelles aliphatisches Urethanacrylat handelt.

21. Siebdruckfarbe oder Siebdrucklack nach einem der
Ansprüche 1 bis 20, **dadurch gekennzeichnet, daß** sie bzw. er ein zusätzliches, von dem UV-härtbaren Monomer verschiedenes UV-härtbares Verdünnungsmittel enthält.

22. Siebdruckfarbe oder Siebdrucklack nach einem der
Ansprüche 1 bis 21, **dadurch gekennzeichnet, daß** sie bzw. er, bezogen auf das Gesamtgewicht der Siebdruckfarben- bzw. Siebdrucklackzusammensetzung, enthält:
- 20-60 Gew.% 60-80gew.%ige Polyesterlösung im Monomer;
- 0-30 Gew.%, bevorzugt 1-15 Gew.%, beschleunigende Komponente;
- 0-60 Gew.%, bevorzugt 5-20 Gew.%, zusätzliches UV-härtbares Monomer oder eines davon verschieden UV-härtbaren Verdünnungdmittels;
- 0,5-2,5 Gew.% Verlaufmittel und/oder Entschäumer;
- 1-12 Gew.% eines oder mehrerer Photoinitiatoren;
- 0-50 Gew.% Füllstoffe;
- 0-50 Gew.% Pigmente;
- 0-10 Gew.% Verdicker.

23. Siebdruckfarbe nach Anspruch 22, **dadurch gekennzeichnet, daß** sie, bezogen auf das Gesamtgewicht der Siebdruckfarbenzusammensetzung, enthält:
- 45-55 Gew.% 60-80gew.%ige Polyesterlösung in 1,6-Hexandioldiacrylat
- 3-6 Gew.% hexafunktionelles Urethanacrylat;
- 8-12 Gew.% 1,6-Hexandioldiacrylat
- 0,5-1,5 Gew.% Polysiloxanentschäumer;
- 1,5-2,5 Gew.% 1-Hydroxycyclohexylacetophenon;
- 1,5-2,5 Gew.% 2-Methyl-1-[4-(methylthiophenyl)-2-morpholinopropan]-1-on:
- 0,5-1,5 Gew.% Isopropylthioxanthon;
- 15-25 Gew.% Füllstoffe;
- 3 bis 8 Gew.% Pigment
- 1,5-2,5 Gew.% pyrogene Kieselsäure.

24. Verfahren zum Verdrucken einer Siebdruckfarbe oder eines Siebdrucklacks nach einem der Ansprüche 1 bis 23, **dadurch gekennzeichnet, daß** die Siebdruckfarbe bzw. der Siebdrucklack im Siebdruck verdruckt wird.

25. Verfahren nach Anspruch 24, **dadurch gekennzeichnet,**
**daß** die Siebdruckfarbe bzw. der Siebdrucklack ohne einen Haftvermittler verdruckt wird.

26. Verwendung eines Siebdruckfarbe oder eines Siebdrucklacks nach einem der Ansprüche 1 bis 23 beim Bedrucken von Polyethylen, mit Perlglanzpigment versetztem Polyethylen, Polypropylen, Polyethylenterephthalat-G und Polycarbonat.
